# EUROPEAN PATENT APPLICATION

(11) **EP 1 318 445 A2**
(43) Date of publication of application: **11.06.2003**
(21) Application number: 02256487.6
(22) Date of filing: 19.09.2002
(51) Int. Cl.: G06F 1/16

(54) **Monitor**

(30) Priority: 04.12.2001 KR 2001076173
(71) Applicant: Samsung Electronics Co., Ltd., Suwon-city, Kyungki-do (KR)
(72) Inventor: Byoun, Dae-hyoun, Seongmnam city, Kyungki-do (KR); Kim, Young-tae, Yongin city, Kyungki-do (KR)
(74) Representative: Geary, Stuart Lloyd

(57) **Abstract**

A monitor comprises a main body (10) and a base member (20) supporting the main body. Coupling parts (30) protrude from either the main body (10) or the base member (20) toward the other and an elastic supporting members (60), provided in the other one, elastically engage the coupling parts (30). With this configuration, the present invention provides a monitor in which a base member thereof is easily joined to and removed from a main body thereof.

## Description

The present invention relates to monitor comprising a screen unit, a base unit for supporting the screen unit and coupling means for coupling the screen unit to the base.

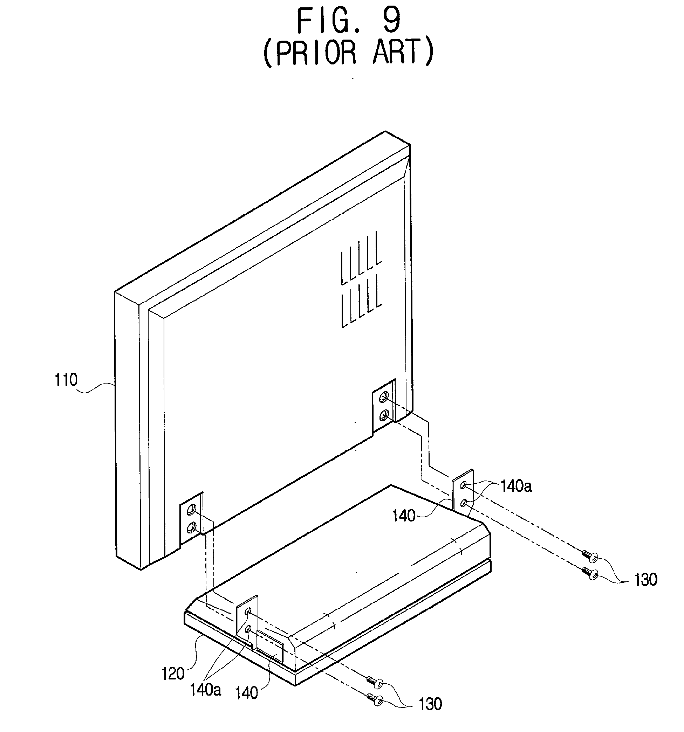

Figure 9 is an exploded rear perspective view of a conventional monitor. As shown therein, the monitor comprises a main body 110 including a screen and a base member 120 supporting the main body 110. A pair of coupling parts 140 are provided at opposite sides of the base member 120. Each coupling member 140 has a plurality of through holes 140a. The main body 110 is united with the base member 120 by means of a plurality of screws 130 through the through holes 140a.

However, in the conventional monitor, a plurality of screws is employed for uniting the main body with the base member which complicates the manufacturing process therefor.

Furthermore, the monitor is generally packed with the main body united with the base member for shipping. Therefore, the volume of the package to be shipped is undesirably large.

Furthermore, when a user wants to change the monitor from a table type (in which the monitor is stood on a table) into a wall-mounted type (in which only the main body is hung on a wall), the screws must be removed one by one.

A monitor according to the present invention is characterised in that the coupling means comprises a recessed finger projecting from one of said units, preferably the base unit, and an elastic detent mechanism in the other of said unit for releasably engaging a recess in the finger.

Preferably, the finger has two opposed recesses and the detent mechanism comprises first and second elastic arms, each elastic having a bent shape to form an angle which is received in a respective one of said recesses for releasably holding the screen unit to the base unit.

The detent mechanism may be mounted directly to the body of screen unit or in a housing which is mounted to the body of the screen unit.

Preferably, there are a plurality of recessed fingers projecting from one of said units and a plurality of elastic detent mechanisms in the other of said units for releasably engaging recesses in respective fingers.

Embodiments of the present invention will now be described, by way of example, with reference to the accompanying drawings, in which:
Figure 1 is a rear perspective view of a first monitor according to the present invention with its main body united with its base member;
Figure 2 is a perspective view showing the monitor of Figure 1 in the state that the main body is separated from the base member;
Figure 3 is an exploded perspective view of a housing joined to the main body and a coupling part joined to the base member;
Figure 4 is an exploded perspective view of the housing of Figure 3;
Figures 5a and 5b are a perspective view and a front view of an elastic supporting member of Figure 4;
Figures 6a through 6c schematically show the housing and the coupling part when the main body is united with and separated from the base member;
Figure 7 is an exploded perspective view of a second monitor according to the present invention;
Figure 8 is an enlarged view showing a main part of the monitor of Figure 7; and
Figure 9 is a rear perspective view of the conventional monitor.

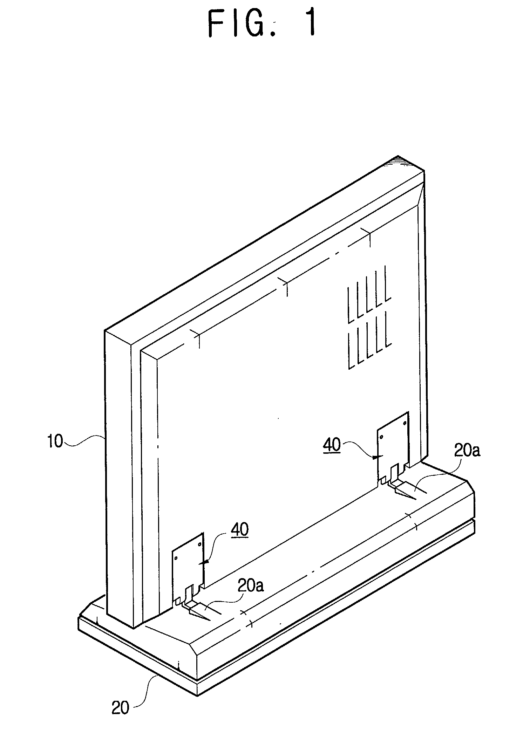

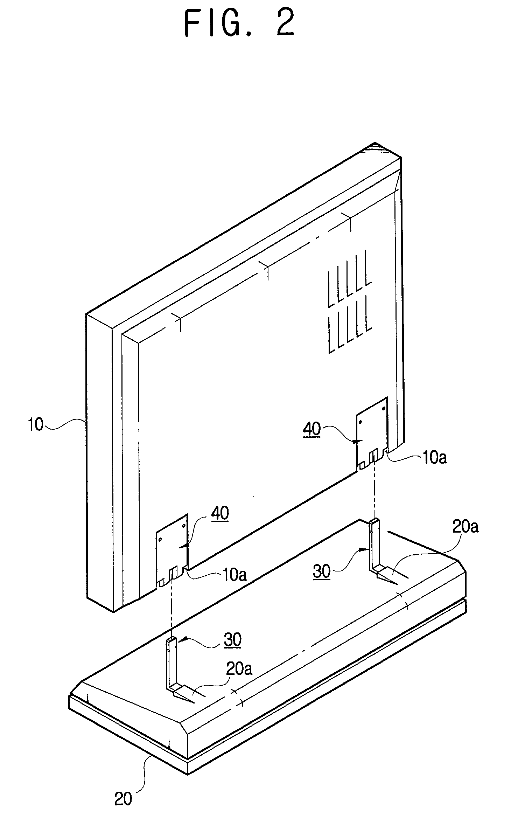

Referring to Figures 1 and 2, a monitor comprises a main body 10, with as screen for displaying images, and a base member 20 for supporting the main body 10.

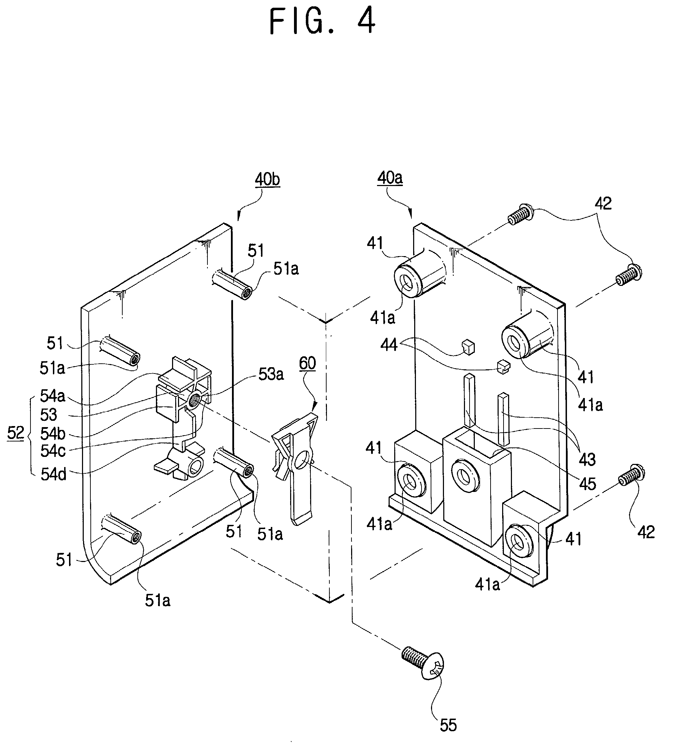

At the rear lower part of the main body 10 is provided a pair of housing accommodating parts 10a, spaced from each other by a predetermined distance. Each housing-accommodating part 10a accommodates a housing 40 having an elastic supporting member 60 (see Figure 4).

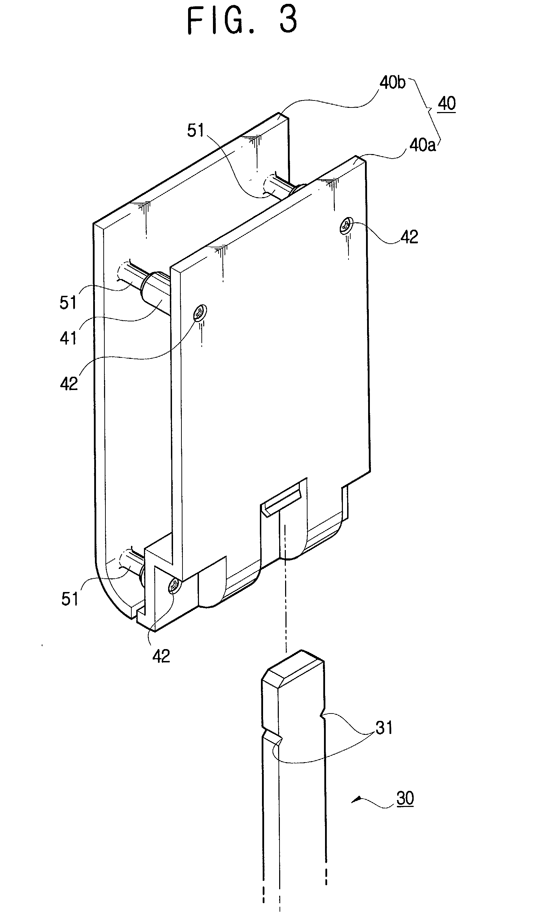

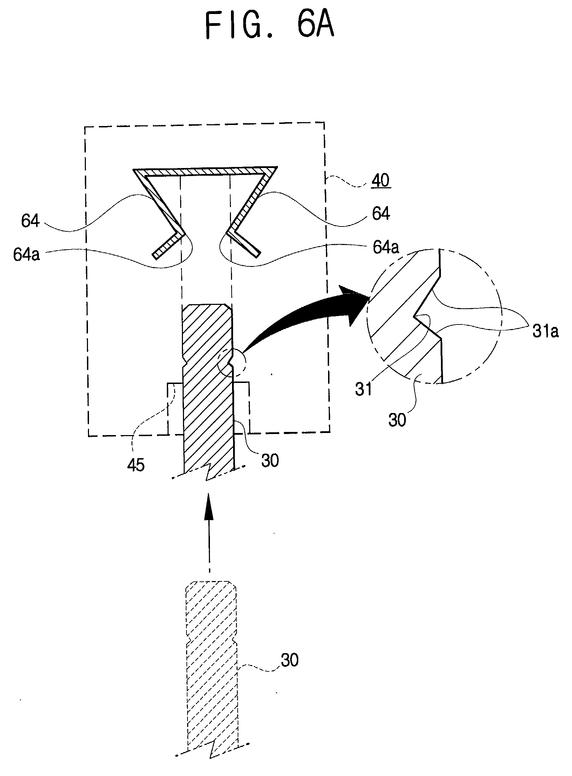

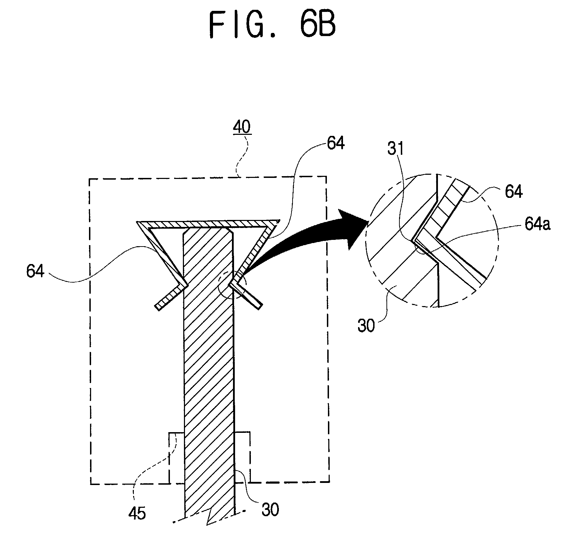

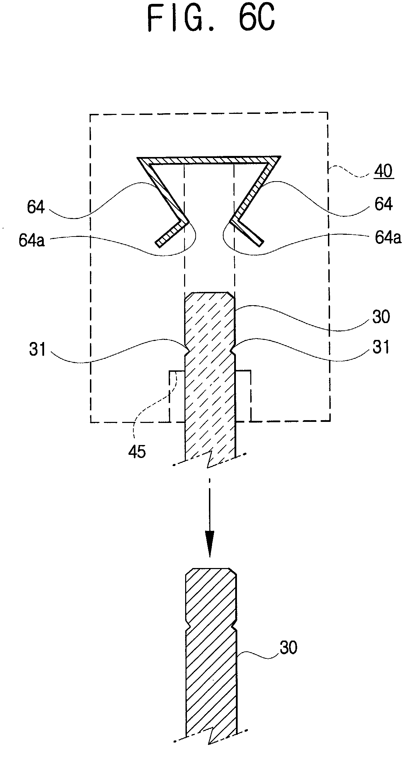

A pair of coupling part holders 20a, in which a pair of coupling parts 30 are partially inserted, is provided on the base member 20. At opposite sides of the free end of each coupling part 30 are provided latch grooves 31 (see Figure 3) in which bent parts 64a (see Figures 6a and 6b) of the elastic supporting member 60 are received. Each latch groove 31 has an inclined portion 31a (see Figures 6a and 6b) for allowing the angles of the bent parts 64a to be smoothly inserted and released from the latch grooves 31.

Referring to Figures 3 and 4, the housing 40 is comprised of a front housing part 40a and a rear housing part 40b releasably joined to each other. On the inside of the rear housing part 40b is provided a plurality of pillars 51 having screw holes 51a.

On the inside of the front housing part 40a is provided a plurality of pillar-accommodating parts 41 receiving the ends of respective pillars 51 of the rear housing part 40b. Each pillar-accommodating part 41 has a through hole 41a corresponding to the screw hole 51a provided in the corresponding pillar 51. Thus, fixing screws 42 can are inserted from the outside of the front housing part 40a into the through holes 41a and then fastened in the screw holes 51a of the pillars 51, thereby joining the front housing part 40a with the rear housing part 40b.

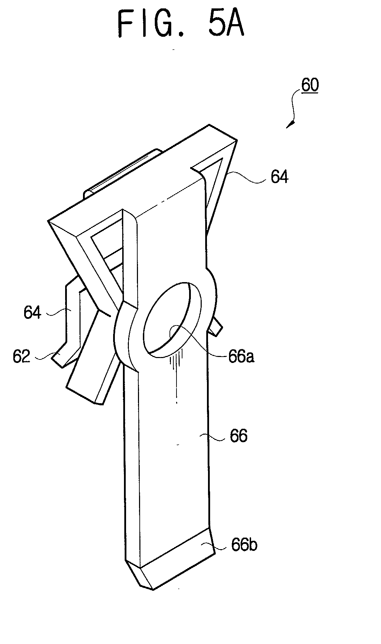

The inside of the front housing part 40a is provided with a pair of fixing ribs 43 spaced from each other at a distance as wide as the width of a guiding part 66 (see Figure 5a) of the elastic supporting member 60 and protruded so as to prevent the guiding part 66 from moving laterally. Above the fixing ribs 43 is provided a pair of fixing projections 44 disposed between the guiding part 66 and the elastic arms 64 of the elastic supporting member 60, respectively. At the lower part of the front housing part 40a is provided an opening 45 through which the coupling part 30 is inserted.

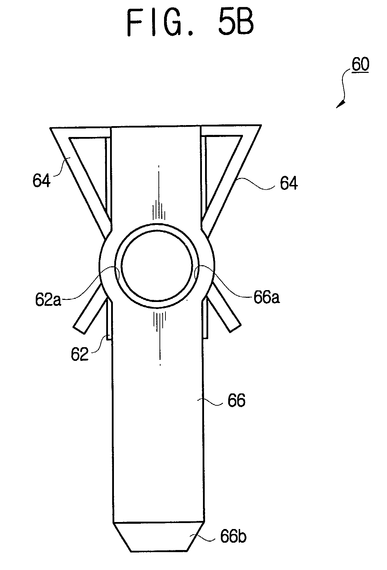

Referring to Figures 5a and 5b, the elastic supporting member 60 is comprised of a pair of fixing parts 62 joined to the inside of the rear housing part 40b, the pair of elastic arms 64 connected to the fixing parts 62 and spaced from each other at a predetermined distance, and the guiding part 66, incorporated with the fixing parts 62 and the elastic arms 64 as one body, for guiding the coupling part 30.

The fixing parts 62 are fastened to a projection part 52 (see Figure 4) protruding from the inside of the rear housing part 40b with a bolt 55. The projection part 52 is, as shown in Figure 4, comprised of a boss part 53 having a screw hole 53a, and a plurality of ribs 54a, 54b, 54c, 54d protruded from the inside of the rear housing part 40b adjacent to the boss part 53. The fixing part 62 is caught on the ribs 54a, 54b, 54c, 54d, and then fastened to the projection part 52 by fastening the bolt 55 to the boss part 53. The fixing part 62 is provided with a through hole 62a through which the bolt 55 is inserted (see Figure 5b).

Referring to Figures 6a and 6b, the elastic arms 64 are bent, giving a symmetrical knock-kneed effect, so that the angles where they are bent can releasably engage the latch grooves 31 of a coupling part 30 inserted in the housing 40 through the opening 45. Because coupling and releasing of the coupling part 30 to and from the housing 40 are substantially performed by the elastic arms 64, the elastic arms 64 are preferably made of a plate spring having good elasticity.

The guiding part 66 guides the coupling part 30 to the elastic arms 64 through the opening 45 of the housing 40, thereby allowing the coupling part 30 to be easily latched on the elastic arms 64. Herein, the guiding part 66 is equal to the coupling part 30 in width, and the length thereof is relatively long.

As shown in Figures 5a and 5b, the guiding part 66 is provided with a tool-passing hole 66a through which the bolt 55 and a tool such as a screwdriver can be passed for fastening the fixing part 62 onto the boss part 53 of the projection part 52 of the rear housing part 40b. The lower end of the guiding part 66 is provided with a caught part 66b bent at a predetermined angle and caught in the opening 45 of the housing 40.

Thus, the opposite sides of the guiding part 66 are caught between the pair of fixing ribs 43 provided on the inside of the front housing part 40a, and the caught part 66b is caught in the opening 45 of the housing 40, thereby preventing the guiding part 66 from moving laterally. Furthermore, the pair of fixing projections 44 is caught between the guiding part 66 and the elastic arms 64 of the elastic supporting member 60, thereby preventing the guiding part 66 from moving up and down. Therefore, the coupling part 30, when being inserted into the housing 40 through the opening 45, is efficiently guided by the guiding part 66.

The fixing part 62, the elastic arms 64 and the guiding part 66 can be made integrally or separately and then combined. The fixing part 62, the elastic arms 64 and the guiding part 66 can be made of plastics or metal.

The process of partially assembling the monitor will now be described.

First, in the state that the front housing part 40a and the rear housing part 40b are separated from each other, the elastic supporting member 60 is mounted on the rear housing part 40b. That is, the fixing part 62 of the elastic supporting member 60 is caught on the ribs 54a, 54b, 54c, 54d of the projection part 52, protruding from the inside of the rear housing part 40b, and is then fastened to the boss part 53 of the projection part 52 by screwing the bolt 55 into the screw hole 53a through the tool-passing hole 66a in the guiding part 66.

Thereafter, the front and rear housing parts 40a, 40b are joined by inserting the pillars 51 of the rear housing part 40b into the pillar-accommodating parts 41 of the front housing part 40a. At this time, the opposite sides of the guiding part 66 are caught in the pair of fixing ribs 43, provided on the inside of the front housing part 40a, and the caught part 66b of the lower end thereof is caught in the opening 45 of the housing 40. Furthermore, the pair of fixing projections 44 is disposed between the guiding part 66 and the elastic arms 64 of the elastic supporting member 60.

Then, the fixing screws 42 are inserted from the outside of the front housing part 40a into the through holes 41a and then screwed into the screw holes 51a in the pillars 51, thereby joining the front housing part 40a with the rear housing part 40b. In the first embodiment, a pair of housings 40 are assembled using the above-described process.

When the assembly of the housings 40 is complete, the housings 40 are mounted in the pair of the housing accommodating parts 10a provided at the rear lower part of the main body 10. Furthermore, the coupling parts 30 are partially inserted in the coupling part holders 20a of the base member 20. The housings 40 and the coupling parts 30 can be fastened to the housing-accommodating part 10a and the coupling part holder 20a by means of bolts or the housings 40 and the coupling parts 30 can be press-fitted into the housing-accommodating part 10a and the coupling part holder 20a respectively.

Thereafter, the base member 20 is easily joined to and separated from the main body 10 as follows.

To combine the main body 10 with the base member 20, the coupling parts 30, fastened to the base member 20, are inserted into the openings 45 in the housings 40, fastened to the rear lower part of the main body 10.

Then, as shown in Figure 6a, the coupling part 30 is guided by the guiding part 66 of the elastic supporting member 60 through the opening 45. Accordingly, as the coupling part 30 is inserted, the angles 64a of elastic arms 64 engage the latch grooves 31, formed on the opposite sides of the coupling part 30 (see Figure 6b). Thus, the joining of the main body 10 to the base member 20 is easily accomplished.

To separate the main body 10 from the base member 20 for packing the main body 10 and the base member 20 separately or for hanging the monitor on a wall, the main body 10 is pulled simply pulled from the base member 20.

Then, as shown in Figure 6c, the angles 64a of the elastic arms 64 are released from the latch grooves 31 and the coupling part 30 is guided out by the guiding part 66 and separated from the housing 40 through the opening 45. Thus, the separation of the main body 10 and the base member 20 is easily accomplished.

In the first embodiment, the housings 40 having the elastic supporting members 60 are manufactured separately from the main body 10 and fastened to the rear lower part of the main body 10. However, in a second embodiment of the present invention, an elastic supporting member 60 can be directly mounted on a main body 10 without a housing.

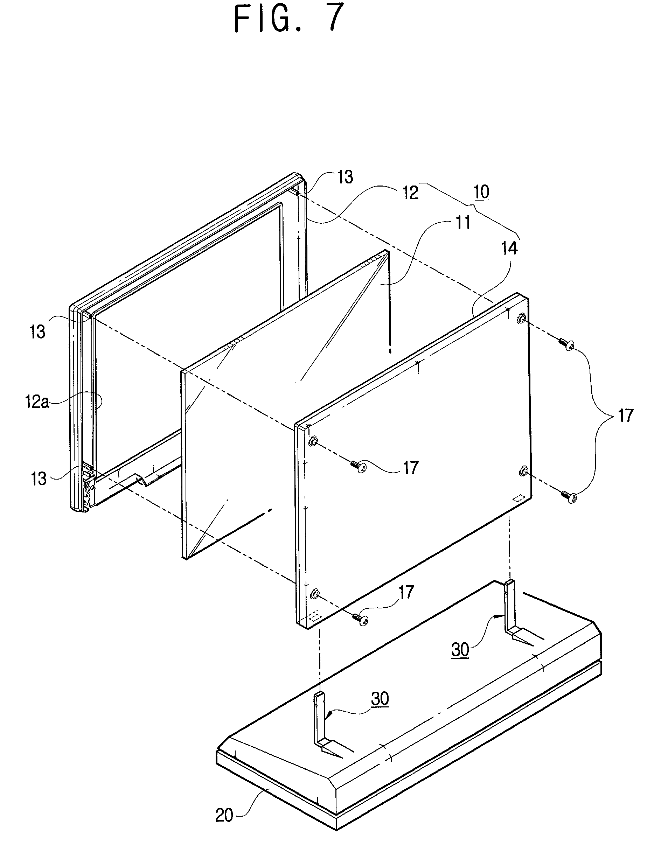

Referring to Figure 7, the main body 10 according to the second embodiment of the present invention comprises front and rear covers 12, 14 which cover a panel 11 for displaying images.

In the front cover 12 is provided a display opening 12a, through which the panel 11 is exposed, and on the inside of the front cover 12, adjacent to the display opening, 12a is provided a plurality of pillars 13, each having a screw hole 13a. On the inside of the rear cover 14 is provided a plurality of pillar-accommodating parts 15 for receiving the ends of the pillars 13 and each having a through hole 15a corresponding to respective screw holes 13a of the pillars 13.

Thus, bolts 17 are inserted from the outside of the rear cover 14 into the through holes 15a of the pillar-accommodating parts 15, and then screwed into the screw holes 13a of the pillars 13, thereby joining the front cover 12 to the rear cover 14.

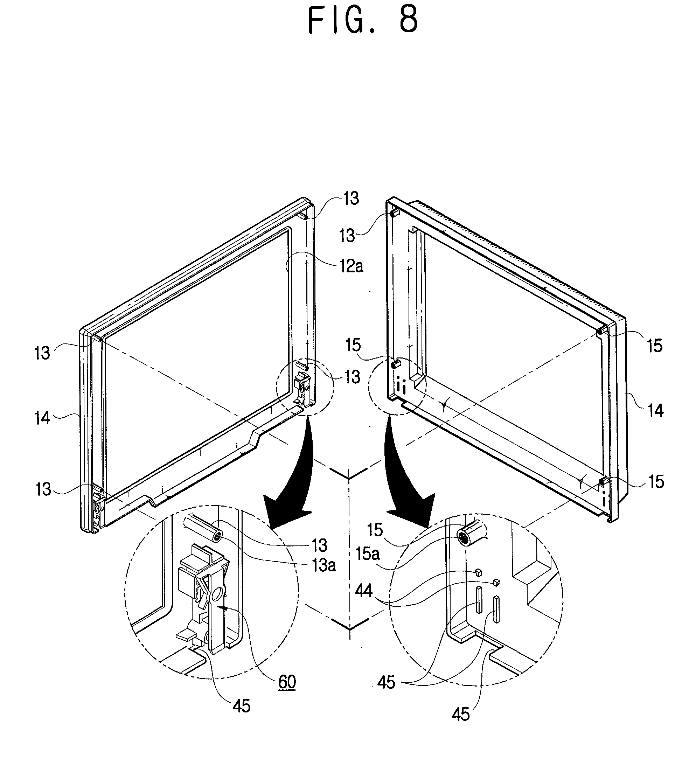

Referring to Figure 8, inside the opposite lower parts of the front cover 12 is provided a pair of elastic supporting members 60. Inside the opposite lower parts of the rear cover 14 are provided fixing ribs 43 and fixing projections for catching the elastic supporting members 60. Furthermore, on the bottom of the front and rear covers 12, 14, where the elastic supporting members 60 are positioned, are provided openings 45 through which coupling parts 30 fastened to a base member 20 can be inserted.

The elastic supporting member 60, the fixing ribs 43 and the fixing projections 44 are the same as in the first embodiment.

With this configuration, in a monitor according to the present invention, the elastic supporting member 60 is provided between the front and rear covers 12, 14, thereby simplifying the manufacturing process.

As described above, according to the present invention, the base member 20 is easily combined to and removed from the main body 10, so that the main body 10 and the base member 20 can be separately packed. Then, the volume of the package is decreased, and therefore the cost of storing and carrying is remarkably decreased. Additionally, the monitor according to the present invention is easily altered from a table type into a wall type or vice versa.

In the second embodiment, the elastic supporting member is mounted on the front cover. However, the elastic supporting member may be mounted on the rear cover, and the fixing ribs and the fixing projections may be provided on the front cover.

As described above, the present invention provides a monitor in which a base member thereof is easily combined to and removed from a main body thereof.

Further, because the base member is easily separated from the main body, the main body and the base member are separately packed, thereby decreasing the volume of the package and decreasing the cost of storing and carrying the package.

Furthermore, because the base member is easily separated from the main body, the monitor can be conveniently changed from a table type into a wall type, or vice versa.

## Claims

1. A monitor comprising a screen unit (10), a base unit (20) for supporting the screen unit (20) and coupling means (30, 60) for coupling the screen unit (10) to the base (20), **characterised in that** the coupling means (30, 60) comprises a recessed finger (30) projecting from one of said units (10, 20) and an elastic detent mechanism (60) in the other of said unit (10, 20) for releasably engaging a recess (31) in the finger (10).

2. A monitor according to claim 1, wherein the finger (30) has two opposed recesses (31) and the detent mechanism (60) comprises first and second elastic arms, each elastic having a bent shape to form an angle which is received in a respective one of said recesses (31) for releasably holding the screen unit (10) to the base unit (20).

3. A monitor according to claim 1 or 2, wherein the finger (10) projects from the base unit (20).

4. A monitor according to claim 3, wherein the detent mechanism (60) is mounted directly to the body of screen unit (20).

5. A monitor according to claim 3, wherein the detent mechanism (60) is mounted in a housing (40) which is mounted to the body of the screen unit (20).

6. A monitor according to any preceding claim, including a plurality of recessed fingers (30) projecting from one of said units (10, 20) and a plurality of elastic detent mechanisms (6) in the other of said units (20) for releasably engaging recesses (31) in respective fingers (10).

7. A monitor comprising a main body and a base member supporting the main body, further comprising:
at least one coupling part protruded from one of the main body and the base member toward the other one; and
an elastic supporting member provided at the other one and elastically supporting the coupling part.

8. The monitor according to claim 7, further comprising:
a housing having an opening through which the coupling part is inserted, and housing the elastic supporting member so as to support the elastic supporting member; and
a housing accommodating part provided at a rear lower part of the main body and accommodating the housing.

9. The monitor according to claim 8, wherein the housing is comprised of front and rear housing parts.

10. The monitor according to claim 9, wherein the elastic supporting member is comprised of:
a fixing part fastened to the inside of one of the front and rear housing parts; and
a pair of elastic arms spaced from each other at a predetermined distance and deformed elastically transverse to a combining direction of the coupling part for elastically supporting the opposite sides of the coupling part.

11. The monitor according to claim 10, wherein the elastic arms have bent parts formed in symmetry with each other at a predetermined portion thereof, and
on the opposite sides of the coupling part are provided latch grooves latched on the corners of the bent parts, respectively.

12. The monitor according to claim 11,wherein each latch groove has an inclined portion.

13. The monitor according to claim 10, further comprising a guiding part which is extended along the combining direction of the coupling part, being incorporated with the fixing part and the elastic arms as one body, and guides the coupling part.

14. The monitor according to claim 13, wherein on the guiding part is provided a tool passing hole.

15. The monitor according to claim 14, wherein at the lower end part of the guiding part is provided a caught part bent at a predetermined angle and caught in the opening of the housing.

16. The monitor according to claim 15, wherein in one of the front and rear housing parts are provided fixing ribs spaced from each other at a distance as wide as the width of the guiding part and protruded so as to catch the guiding part.

17. The monitor according to claim 16, further comprising fixing projections spaced from the fixing ribs at a predetermined distance and disposed between the guiding part and the elastic arms.

18. The monitor according to claim 9, in one of the front and rear housing parts is provided a plurality of bosses protruded toward the other one and having screw holes; and
in the other one is provided a plurality of boss accommodating parts accommodating the bosses and having through holes corresponding to the screw holes.

19. The monitor according to claim 18, further comprising fixing screws fastened to the screw holes through the through holes.

20. The monitor according to claim 7, wherein in the base member is provided a coupling part holder in which a pair of the coupling parts are partially inserted.

21. The monitor according to claim 7, wherein the main body is comprised of front and rear covers which are removably combined each other, and
the elastic supporting member is mounted on the inside of one of the front and rear covers.
